# EUROPÄISCHE PATENTSCHRIFT

(11) **EP 3 659 243 B1**
(45) Veröffentlichungstag und Bekanntmachung des Hinweises auf die Patenterteilung: **29.03.2023**
(21) Anmeldenummer: 18750368.5
(22) Anmeldetag: 26.07.2018
(51) Int. Cl.: H02K 15/00

(54) **VERFAHREN UND VORRICHTUNG ZUM BEARBEITEN VON LEITERSEGMENTEN EINES WICKLUNGSTRÄGERS EINER ELEKTRISCHEN MASCHINE**
METHOD AND DEVICE FOR PROCESSING CONDUCTOR SEGMENTS OF A WINDING SUPPORT OF AN ELECTRIC MACHINE
PROCÉDÉ ET DISPOSITIF POUR USINER DES SEGMENTS CONDUCTEURS D'UN SUPPORT D'ENROULEMENT D'UNE MACHINE ÉLECTRIQUE

(30) Priorität: 27.07.2017 DE 102017116973
(43) Veröffentlichungstag der Anmeldung: 03.06.2020
(73) Patentinhaber: Strama-MPS Maschinenbau GmbH & Co. KG, 94315 Straubing (DE)
(72) Erfinder: VOLLMAR, Oliver Christian, 94569 Stephansposching (DE); EBENBECK, Andreas, 94315 Straubing (DE)
(74) Vertreter: Dr. Solf & Zapf Patent- und Rechtsanwalts PartG mbB
(86) Internationale Anmeldenummer: PCT/EP2018/070340
(87) Internationale Veröffentlichungsnummer: WO 2019/020765

(56) Entgegenhaltungen:
- DE-A1-102012 202 830
- DE-A1-102012 215 309
- DE-A1-102014 226 710

## Beschreibung

Die Erfindung betrifft ein Verfahren und eine Vorrichtung zum Bearbeiten von Leitersegmenten eines Wicklungsträgers einer elektrischen Maschine, insbesondere eines Stators eines Elektromotors.

Derartige Vorrichtungen und Verfahren sind im Stand der Technik in einer Vielzahl von Ausgestaltungen bekannt. Insbesondere bei Anwendungen aus dem Bereich der Elektromobilität werden elektrische Maschinen, insbesondere Elektromotoren, benötigt, die hohe Leistungsanforderungen erfüllen. Oftmals werden dazu Elektromotoren verwendet, deren Rotor- oder Statorwicklungen nicht durch weithin bekannte Drahtwicklungen realisiert werden, sondern mittels I- oder U-förmiger Wicklungsstäbe, die in entsprechenden Ausnehmungen in dem Blechpaket eines Rotors oder Stators eingesetzt und endseitig in Abhängigkeit von der Motorkonfiguration miteinander verbunden, insbesondere verschweißt, werden.

DE 10 2012 202 830 A1 offenbart eine Vorrichtung zum Zusammenfügen eines Drähtepaars einer Statorspule. Zum Zusammenfügen werden zwei gegenüberliegend zueinander angeordnete Elektroden auf ein Drähtepaar zubewegt, so dass das Drähtepaar zwischen den Elektroden eingeklemmt wird. Anschließend erfolgt ein Widerstandsschweißen des Drähtepaars mittels der beiden Elektroden.

DE 10 2012 215 309 A1 offenbart ein Verfahren zum Automatisieren des Fügens von zwei Drahtenden durch eine metallurgische Reaktion. Zum Zusammenfügen von zwei Leiterenden werden die Leiterenden mittels zwei gegenüberliegend angeordneter Elektroden zusammengepresst. Zuvor wird ein reaktionsfähiges Metall zwischen die Fügeoberflächenbereiche eingebracht. Das Verschweißen erfolgt mittels Widerstandsschweißen.

DE 10 2014 226 710 A1 offenbart ein Verfahren und eine Vorrichtung zum Verschweißen von Drahtsegmentpaaren. Die Vorrichtung weist zwei scheibenförmige Anpresseinheiten auf, die die Enden der Drahtsegmentpaare mit Kontaktbereichen gegeneinander pressen. Anschließend erfolgt ein Schweißen mittels Laserstrahlung.

Die aus der Praxis bekannten Verfahren und Vorrichtungen weisen allerdings den Nachteil auf, dass keine ausreichende Präzision bei der Positionierung der für einen Schweißvorgang zusammengeführten Endabschnitte gewährleistet werden kann.

Die vorgenannte Aufgabe ist durch ein Verfahren gemäß Patentanspruch 1 gelöst, indem ein Zusammenführen endabschnittpaarindividuell erfolgt, also jedes zusammenzufügende Endabschnittpaar wird mit einem individuellen Vorgang zusammengeführt und verschweißt.

Bei der Herstellung von elektrischen Maschinen, insbesondere Elektromotoren, werden elektrische Leitersegmente in Form von Wicklungsstäben an einem Wicklungsträger, z. B. dem Blechpaket für einen Stator oder einen Rotor eines Motors, befestigt, um während des Betriebs des Motors als elektrisch leitende Wicklungen zu dienen.

Vorliegend kommen zur Herstellung der Wicklungen der elektrischen Maschine Wicklungsstäbe in Form von U- oder I-förmigen Wicklungsstäben zum Einsatz, die in dafür vorgesehenen Ausnehmungen an einem Wicklungsträger angeordnet und endseitig in Abhängigkeit von der Auslegung der elektrischen Maschine miteinander verbunden werden. Bei U-förmigen Wicklungsstäben müssen die Endabschnitte nur auf einer Seite verbunden werden, wobei bei I-förmigen Wicklungsstäben die Endabschnitte auf beiden Seiten des Wicklungsträgers verbunden werden müssen. Vor dem Verbinden müssen die Endabschnitte der Leitersegmente bedarfsweise zumindest teilweise verformt werden, insbesondere muss in Abhängigkeit von der Auslegung der elektrischen Maschine der radiale Abstand und/oder der Abstand in Umfangsrichtung zwischen den Endabschnitten der Leitersegmente verändert werden, beispielsweise um zwei Endabschnitte zu verschweißen.

Das Verfahren sieht vor, dass zunächst ein Heranführen einer auf einer Kreisbahn entlang einer Führungsvorrichtung bewegbaren Bearbeitungseinheit mit mindestens einem ersten Aktorelement und mindestens einem zweiten Aktorelement an mindestens ein erstes Endabschnittpaar mit einem ersten Endabschnitt und einem zweiten Endabschnitt erfolgt. Durch das Heranführen gelangen die Endabschnitte derart in den Arbeitsbereich der Bearbeitungseinheit, insbesondere des ersten Aktorelements und des zweiten Aktorelements, dass sie von den Aktorelementen bearbeitbar sind. Alternativ dazu ist vorgesehen, dass der erste Endabschnitt und der zweite Endabschnitt, insbesondere der Wicklungsträger mit den Leitersegmenten, an die Bearbeitungseinheit, insbesondere an das erste Aktorelement und das zweite Aktorelement, herangeführt werden. Jedenfalls erfolgt eine Relativbewegung zwischen der Führungsvorrichtung und den Endabschnitten.

Es ist insbesondere vorgesehen, dass der Wicklungsträger beispielsweise in einer Haltevorrichtung gehalten und die Führungsvorrichtung zusammen mit der Bearbeitungseinheit an den Wicklungsträger, insbesondere dessen Leitersegmente mit den Endabschnitten, herangeführt werden, vorzugsweise so, dass eine Mittelachse der Kreisbahn koaxial mit einer Mittelachse des Wicklungsträgers angeordnet ist. Anschließend erfolgt ein Zusammenführen des ersten Aktorelements und des zweiten Aktorelements, so dass in einem Klemmbereich mindestens eine durch das Zusammenführen des ersten Aktorelements und des zweiten Aktorelements verursachte Klemmkraft den ersten Endabschnitt und den zweiten Endabschnitt in eine Schweißposition zusammenführt. Das Zusammenführen des ersten Endabschnitts und des zweiten Endabschnitts erfolgt vorzugsweise in einer Ebene, zu der die Mittelachse der Kreisbahn eine Normale ist.

Das Zusammenführen des ersten Endabschnitts und des zweiten Endabschnitts eines Endabschnittpaares erfolgt insbesondere individuell, so dass bei jedem Zusammenführen lediglich ein erster Endabschnitt und ein zweiter Endabschnitt zusammengeführt werden. Durch das individuelle Zusammenführen des ersten Endabschnitts und des zweiten Endabschnitts mit dem ersten Aktorelement und dem zweiten Aktorelement werden die Endabschnitte sehr präzise zusammengeführt, so dass sie anschließend vorteilhaft verschweißt werden können. Das Verschweißen erfolgt insbesondere mittels Laserschweißen.

Vorzugsweise wird beim Zusammenführen das erste Aktorelement und das zweite Aktorelement auf einer gemeinsamen, gedachten Achse aufeinander zu bewegt, um den ersten Endabschnitt und den zweiten Endabschnitt, insbesondere in einer Radialrichtung zur Kreisbahn der Führungsvorrichtung, aufeinander zuzubewegen, bis sie aneinander anliegen. Das erste Aktorelement und das zweite Aktorelement werden dazu relativ zueinander bewegt und der erste Endabschnitt und der zweite Endabschnitt zwischen dem ersten Aktorelement und dem zweiten Aktorelement eingeklemmt.

Wenn der erste Endabschnitt und der zweite Endabschnitt, insbesondere unter der Wirkung einer Klemmkraft, aneinander anliegen, ist die Schweißposition erreicht. In dieser Schweißposition kann dann ein Verschweißen erfolgen.

Die Bearbeitungszeit wird erfindungsgemäß dadurch reduziert, dass mindestens zwei Bearbeitungseinheiten vorhanden sind, und dass die Bearbeitungseinheiten so gesteuert werden, dass mindestens eine erste Bearbeitungseinheit ein Endabschnittpaar in der Schweißposition hält, während mindestens eine zweite Bearbeitungseinheit zu einem noch zu verschweißenden Endabschnittpaar bewegt wird. Die Bearbeitungseinheiten werden gemeinsam an der Führungsvorrichtung geführt und sind deshalb bezüglich ihrer Bewegung aufeinander abgestimmt. Durch das Vorhandensein von mindestens zwei Bearbeitungseinheiten kann eine Bearbeitungseinheit ein Endabschnittpaar bereits in der Schweißposition halten, während die zweite Bearbeitungseinheit zu einem nächsten Endabschnittpaar geführt wird, um dieses in seine Schweißposition zu bringen. Dadurch kann vorteilhaft die Auslastung der Schweißvorrichtung gesteigert werden.

Besonders bevorzugt ist vorgesehen, dass drei Bearbeitungseinheiten vorhanden sind, die gemeinsam an der Führungsvorrichtung geführt werden. Bei drei Bearbeitungseinheiten ist es vorteilhaft, dass diese so gesteuert werden, dass zwei Bearbeitungseinheiten jeweils ein Endabschnittpaar in seiner Schweißposition halten, während die dritte Bearbeitungseinheit zu ihrer neuen Einsatzposition an ein neues Einsatzpaar herangeführt wird. Dabei fährt jede Bearbeitungseinheit jeweils zu einem nächsten Endabschnittpaar, wenn der Schweißvorgang abgeschlossen ist. Aufgrund der sehr kurzen Einsatzzeiten der Schweißvorrichtung befindet sich dadurch stets mindestens ein Endabschnittpaar in der Schweißposition, so dass die Schweißvorrichtung - abzüglich ihrer eigenen Verfahrzeiten - zu 100% auslastbar ist.

Gemäß einer Ausgestaltung des Verfahrens ist vorgesehen, dass das erste Aktorelement und das zweite Aktorelement mindestens eine Klemmkraft auf das Endabschnittpaar, also gegenläufig wirkende Kräfte auf den ersten Endabschnitt und den zweiten Endabschnitt, bewirken, bis das Verschweißen abgeschlossen ist. Der erste Endabschnitt und der zweite Endabschnitt werden folglich nicht lediglich elastisch und plastisch verformt, bis sie aneinander anliegen, sondern werden in der Schweißposition, in der jeweils mindestens eine Fläche des ersten Endabschnitts und mindestens eine Fläche des zweiten Endabschnitts aneinander anliegen, solange gehalten, bis der Schweißvorgang vollständig abgeschlossen ist. Abschließend werden das erste Aktorelement und das zweite Aktorelement jeweils in entgegengesetzter Richtung wieder voneinander wegbewegt und insbesondere zu einem nächsten zu verschweißenden Endabschnittpaar auf der Kreisbahn verfahren.

Als besonders vorteilhaft hat sich gemäß einer Weiterbildung des Verfahrens herausgestellt, wenn das Zusammenführen des ersten Aktorelements und des zweiten Aktorelements parallel zu einer Radialrichtung ausgehend von einer Mittelachse der Kreisbahn erfolgt. Insbesondere erfolgt das Zusammenführen in einer von der Mittelachse der Kreisbahn ausgehenden Radialrichtung, vorzugsweise in einer Ebene, zu der die Mittelachse eine Normale ist. Die Leitersegmente sind umfänglich an dem Wicklungsträger gehalten, wobei der erste Endabschnitt vorzugsweise auf einem kleineren Radius in Bezug auf die Mittelachse des Wicklungsträgers als der zweite Endabschnitt angeordnet ist. Um den ersten Endabschnitt und den zweiten Endabschnitt nun in dieser Radialrichtung zusammenzuführen und zu verbinden, sind das erste Aktorelement und das zweite Aktorelement derart an der Bearbeitungseinheit gehalten, dass sie in Richtung der Mittelachse der Kreisbahn der Führungsvorrichtung, insbesondere in Richtung der Mittelachse des Wicklungsträgers, auf die Endabschnitte einwirken können. Der erste Endabschnitt wird folglich zumindest teilweise in Radialrichtung in Richtung eines kleineren Radius bewegt, während der zweite Endabschnitt in Radialrichtung in Richtung eines größeren Radius bewegt wird, bis sich beide treffen.

Gemäß einer weiteren Ausgestaltung des Verfahrens hat sich als vorteilhaft herausgestellt, wenn eine Mehrzahl von Leitersegmenten, insbesondere eine Mehrzahl von Endabschnittpaaren vorhanden ist, und dass alle Endabschnittpaare durch mehrfache Durchführung des Verfahrens zusammengeführt und verschweißt werden. Dabei ist ein erster Endabschnitt eines Endabschnittpaares auf einem größeren Radius durch ein auf einem größeren Radius angeordnetes Leitersegment und ein zweiter Endabschnitt eines Endabschnittpaares durch ein auf einem kleineren Radius angeordnetes Leitersegment gebildet. Die Bearbeitungseinheit fährt nun nacheinander jedes Endabschnittpaar, insbesondere auf dem Umfang, an und fügt dieses zusammen, so dass das Endabschnittpaar anschließend verschweißt werden kann. Die Bearbeitungseinheit ist dabei auf der Kreisbahn geführt, so dass jedes Endabschnittpaar angefahren werden kann.

Vorzugsweise die Güte der Schweißverbindung lässt sich gemäß einer weiteren Ausgestaltung des Verfahrens dadurch steigern, dass mittels einer Richtgeometrie des ersten Aktorelements und/oder des zweiten Aktorelements während des Zusammenführens und/oder in der Schweißposition eine Ausrichtung des ersten Endabschnitts und/oder des zweiten Endabschnitts erfolgt. Die Richtgeometrie, die beispielsweise eine Anlagefläche und geneigte Führungsflächen an den Aktorelementen umfasst, sorgt dafür, dass, sofern sich die Endabschnitte eines Endabschnittpaars noch nicht in einer optimalen Relativposition zueinander befinden, der erste Endabschnitt und der zweite Endabschnitt während des Zusammenführens und/oder in der Schweißposition in eine optimale Ausgangslage zum Verschweißen geführt werden, nämlich so, dass mindestens zwei Flächen des ersten Endabschnitts und des zweiten Endabschnitts bündig und flächig aneinander anliegen. Der erste Endabschnitt und der zweite Endabschnitt können dann miteinander verschweißt werden. Durch die Richtgeometrie werden auch rotative Fehlstellungen des ersten Endabschnitts und/oder des zweiten Endabschnitts korrigiert.

Die Bearbeitungszeit lässt sich insbesondere bei Wicklungsträgern mit Leitersegmenten auf vier unterschiedlichen Radien ausgehend von einer Mittelachse eines Wicklungsträgers dadurch verkürzen, dass ein in einer Radialrichtung ausgehend von einer Mittelachse der Kreisbahn innenliegendes Endabschnittpaar und ein radial außenliegendes Endabschnittpaar nacheinander oder gleichzeitig zusammengeführt und verschweißt werden. Es ist insbesondere auch vorgesehen, dass Leitersegmente auf sechs oder acht unterschiedlichen Radien angeordnet sind, so dass in Radialrichtung jeweils drei oder vier Endabschnittpaare angeordnet sind.

Bei einer Bearbeitung zeitlich nacheinander fährt eine Bearbeitungseinrichtung zunächst ein innenliegendes oder ein außenliegendes Endabschnittpaar an, führt dieses Endabschnittpaar zusammen und hält es solange zusammen, bis es verschweißt ist. Anschließend fährt die Bearbeitungseinheit zu dem jeweils anderen Endabschnittpaar oder zu den jeweils in Radialrichtung anderen Endabschnittpaaren und führt dieses oder diese zusammen, bis es verschweißt ist. Da die Bearbeitungseinheit bei diesem Ausführungsbeispiel nur radial verfahren werden muss, verkürzt sich die Verfahrzeit und damit die Bearbeitungszeit insgesamt.

Besonders vorteilhaft ist jedoch, wenn ein radial innenliegendes Endabschnittpaar und ein außenliegendes Endabschnittpaar oder mehrere in einer Radialrichtung angeordnete Endabschnittpaare gleichzeitig von den beiden Aktorelementen zusammengeführt werden, so dass die Schweißvorrichtung zunächst das eine und unmittelbar anschließend das andere Endabschnittpaar verschweißen kann. Dazu sind die Aktorelemente beispielsweise gekröpft oder gebogen ausgebildet, so dass beide Endabschnittpaare gleichzeitig zusammengeführt werden können, und für die Schweißvorrichtung, insbesondere in Parallelrichtung zu einer Mittelachse der Kreisbahn, zum Verschweißen zugänglich bleiben.

Die Bearbeitungszeit kann gemäß einer weiteren Ausgestaltung des Verfahrens dadurch weiter optimiert werden, dass ein in einer Radialrichtung ausgehend von einer Mittelachse der Kreisbahn innenliegendes Endabschnittpaar mit einem ersten Aktorelement und einem zweiten Aktorelement - einer ersten Bearbeitungseinheit - zusammengeführt wird und ein radial außenliegendes Endabschnittpaar mit einem dritten Aktorelement und einem vierten Aktorelement - mit einer zweiten Bearbeitungseinheit - zusammengeführt wird. Das Verfahren wird vorzugsweise mit mindestens zwei Bearbeitungseinheiten durchgeführt, die auf Kreisbahnen mit unterschiedlichen Radien an der Führungsvorrichtung geführt werden. Mit der radial innenliegenden Bearbeitungseinheit sind die radial innenliegenden Endabschnittpaare und mit der radial außenliegenden Bearbeitungseinheit die radial außenliegenden Endabschnittpaare zusammenführbar und in ihrer Schweißposition haltbar. Dieses Ausführungsbeispiel eignet sich insbesondere für Wicklungsträger, an denen Leitersegmente auf vier unterschiedlichen Radien ausgehend von einer Mittelachse des Wicklungsträgers angeordnet sind.

Vorzugsweise um die Standzeiten der Aktorelemente zu steigern, ist gemäß einer weiteren Ausgestaltung des Verfahrens vorgesehen, dass das erste Aktorelement und/oder das zweite Aktorelement zumindest während des Verschweißens gekühlt werden, insbesondere dauerhaft gekühlt werden. Eine Kühlvorrichtung wird dazu derart gesteuert, dass ein Aktorelement oder beide Aktorelemente während des Schweißvorgangs, insbesondere während des Laserschweißens, aktiv oder passiv gekühlt werden, beispielsweise mittels Flüssigkeits- oder Gasdurchleitung oder mittels eines Lüfters gekühlt werden. Ferner ist auch vorgesehen, dass die Kühlvorrichtung so gesteuert wird, dass die Aktorelemente dauerhaft gekühlt werden, folglich während der gesamten Durchführungszeit des Verfahrens. Als vorteilhaft hat sich eine Kühlung mittels Konvektion herausgestellt.

Die eingangs genannte Aufgabe ist ferner bei einer Vorrichtung zum Bearbeiten von Leitersegmenten eines Wicklungsträgers einer elektrischen Maschine, insbesondere eines Elektromotors, mit dem Merkmalsinhalt des Patentanspruchs 6 gelöst. Die Vorrichtung weist mindestens eine Führungsvorrichtung und mindestens zwei Bearbeitungseinheiten auf. Die Bearbeitungseinheiten sind entlang der Führungsvorrichtung auf einer Kreisbahn bewegbar, insbesondere an der Führungsvorrichtung, gehalten. Die Bearbeitungseinheiten weisen jeweils mindestens ein erstes Aktorelement und mindestens ein zweites Aktorelement auf, wobei das erste Aktorelement und das zweite Aktorelement relativ zueinander bewegbar sind, so dass in einem Klemmbereich zwischen dem ersten Aktorelement und dem zweiten Aktorelement mindestens eine Klemmkraft bewirkbar ist.

Die Vorrichtung weist vorzugsweise mindestens einen Aufnahmebereich auf, in dem ein Wicklungsträger mit daran angeordneten Leitersegmenten mit seiner Mittelachse koaxial zu einer Mittelachse der Kreisbahn angeordnet werden kann. Beispielsweise wird dazu der Wicklungsträger an die Vorrichtung herangeführt, bis er im Aufnahmebereich angeordnet ist und/oder die Vorrichtung wird an den, beispielsweise an einer Haltevorrichtung gehaltenen, Wicklungsträger herangeführt, bis der Wicklungsträger im Aufnahmebereich mit seiner Mittelachse koaxial zur Mittelachse der Kreisbahn angeordnet ist. Die mindestens zwei Bearbeitungseinheiten sind dann auf der Kreisbahn entlang der Führungsvorrichtung um den Wicklungsträger herum führbar, so dass nach und nach alle Endabschnitte bzw. Endabschnittpaare von der Bearbeitungseinheit angefahren, zusammengeführt und dann verschweißt werden können.

Durch die Führung der Bearbeitungseinheit auf einer Kreisbahn wird die Positionierung der Bearbeitungseinheit relativ zu den Endabschnitten vereinfacht. Das erste Aktorelement und das zweite Aktorelement sind derart ausgebildet und an der Bearbeitungseinheit angeordnet, dass mit dem ersten Aktorelement und dem zweiten Aktorelement eine Klemmkraft, insbesondere in Radialrichtung ausgehend von der Mittelachse der Kreisbahn, in einem Klemmbereich zwischen dem ersten Aktorelement und dem zweiten Aktorelement aufbringbar ist. Durch das Zusammenführen des ersten Aktorelements und des zweiten Aktorelements werden die im Klemmbereich angeordneten Endabschnitte, insbesondere ein radial innenliegender Endabschnitt und ein radial außenliegender Endabschnitt, elastisch und/oder plastisch verformt, bis sich die Endabschnitte in ihrer Schweißposition befinden, nämlich mindestens eine Fläche des ersten Endabschnitts plan und bündig an einer Fläche des zweiten Endabschnitts anliegt.

Es ist erfindungsgemäß vorgesehen, dass die Führungsvorrichtung mindestens ein kreisförmiges Schienenelement aufweist, insbesondere mindestens ein Schienenelement mit Zähnen aufweist. Vorzugsweise ist die Führungsvorrichtung als kreisförmige Schienenanordnung ausgebildet, an der die Bearbeitungseinheiten geführt sind. Durch das kreisförmige Schienenelement können die Bearbeitungseinheiten auf vorteilhafte Weise auf der Kreisbahn um den Wicklungsträger herum geführt werden, um nacheinander alle Endabschnittpaare zusammenzuführen. Die Bearbeitungseinheiten weisen dazu ein Führungsmittel auf, mit dem sie an dem Schienensystem auf der Kreisbahn führbar sind. Das Führungsmittel ist beispielsweise als Führungsrolle oder Führungsrollen, Gleiteelemente, und/oder Kugelführung ausgebildet. Vorzugsweise weist mindestens ein Schienenelement Zähne auf, insbesondere Zähne in die ein Zahnrad eingreifbar ist, so dass die Bearbeitungseinheit über die Zähne und das Zahnrad an der Führungsvorrichtung fortbewegt und präzise geführt werden kann.

Ferner ist erfindungsgemäß vorgesehen, dass die Bearbeitungseinheiten jeweils eine Grundplatte aufweisen, an der Grundplatte ein Antrieb, das erste Aktorelement und das zweite Aktorelement angeordnet sind. Die Grundplatte ist folglich von dem Antrieb entlang der Führungsvorrichtung bewegbar. Wird folglich die Grundplatte auf der Kreisbahn um die Mittelachse bewegt, werden folglich auch die Aktorelemente auf einer Kreisbahn bewegt, wodurch die Aktorelemente von einem Endabschnittpaar zu einem nächsten Endabschnittpaar verfahrbar sind.

Als Materialien für die Vorrichtung, insbesondere die Aktorelemente und/oder die Führungsvorrichtung, haben sich insbesondere X153CrMoV12, 100Cr6, X90CrMoV18, 40NiCrMo6, 16MnCr5, 42CrMo4 und/oder X155CrVMo12-1 als vorteilhaft herausgestellt.

Insbesondere die Bearbeitungsgeschwindigkeit der Vorrichtung wird erfindungsgemäß dadurch gesteigert, dass mindestens zwei Bearbeitungseinheiten an der Führungsvorrichtung geführt sind, bevorzugt drei, vier, fünf oder sechs Bearbeitungseinheiten an der Führungsvorrichtung geführt sind. Die Bearbeitungseinheiten sind gemeinsam an der Führungsvorrichtung geführt und werden so gesteuert, dass sich die Bearbeitungseinheiten untereinander beeinflussungsfrei bewegen. Bei einer Mehrzahl an Bearbeitungseinheiten wird jeweils nur ein Teil der Endabschnitte eines Wicklungsträgers durch eine Bearbeitungseinheit und die anderen Teile durch die anderen Bearbeitungseinheiten bearbeitet.

Beispielsweise bei drei Bearbeitungseinheiten an einer gemeinsamen Führungsvorrichtung sind diese so gesteuert, dass an zwei Bearbeitungseinheiten stets das jeweilige Endabschnittpaar in der Schweißposition gehalten wird, während die dritte Bearbeitungseinheit neu positioniert wird. So kann gewährleistet werden, dass die Schweißvorrichtung optimal ausgelastet wird. Nach Abschluss des Schweißvorgangs an dem jeweiligen Endabschnittpaar wird die jeweilige Bearbeitungseinheit zu einem noch zu verbindenden Endabschnittpaar verfahren.

Zudem hat sich gemäß einer Ausgestaltung als vorteilhaft herausgestellt, wenn der jeweilige Antrieb der Bearbeitungseinheiten elektromotorisch und/oder linearmotorisch und/oder pneumatisch und/oder hydraulisch und/oder mittels Kurvenscheiben und/oder mittels Reibrad ausgebildet ist. Die Verfahrbarkeit einer Bearbeitungseinheit entlang der Führungsvorrichtung wird folglich durch eines oder mehrere der vorgenannten Antriebskonzepte realisiert. Besonders bevorzugt weist eine Bearbeitungseinheit einen Elektromotor mit mindestens einem Zahnrad auf, wobei das Zahnrad mit Zähnen an mindestens einem Schienenelement der Führungsvorrichtung oder einer Zahnschiene an einem Schienenelement derart zusammenwirkt, dass eine Drehung des Zahnrades eine Bewegung der Bearbeitungseinheit entlang der Führungsvorrichtung auf einer Kreisbahn bewirkt.

Gemäß einer Weiterbildung ist ferner vorgesehen, dass die Aktorelemente elektromotorisch und/oder linearmotorisch und/oder pneumatisch und/oder hydraulisch zueinander bewegbar sind. Als besonders vorteilhaft hat sich ein pneumatischer oder servoelektrischer Antrieb herausgestellt. Zum Zusammenführen der Endabschnitte eines Endabschnittpaars müssen die Aktorelemente aufeinander zu bewegt und dazu angetrieben werden. Dieser Antrieb ist nach mindestens einem der vorgenannten Antriebskonzepte oder einer Kombination daraus ausgebildet. Der Antrieb ist jedenfalls so ausgebildet, dass er die erforderlichen Kräfte zum Zusammenführen und damit zur elastischen und/oder plastischen Verformung der Endabschnitte des Endabschnittpaares aufbringen kann.

Insbesondere eine Beschädigung oder eine Verschmutzung der umliegenden Endabschnitte und/oder der Bearbeitungseinheit wird dadurch verhindert, dass die Bearbeitungseinheiten jeweils mindestens eine Spritzschutzvorrichtung, insbesondere mindestens ein Spritzschutzblech, aufweisen. Die Spritzschutzvorrichtung bzw. das Spritzschutzblech sind so angeordnet, dass von einem Schweißvorgang ausgehende Verschmutzungen der umliegenden Endabschnitte und/oder der Bearbeitungseinheit zuverlässig verhindert werden, indem die Spritzschutzvorrichtung etwaige Verschmutzungen aufhält.

Die Präzision der Bearbeitungseinheit kann dadurch weiter gesteigert werden, dass die Aktorelemente als Aktorstäbe ausgebildet sind. Durch die längliche Erstreckung der Aktorstäbe, deren Erstreckung in eine Quer- und eine Höhenrichtung deutlich geringer als die in eine Längsrichtung ist, können die Endabschnitte einzeln angefahren und verschoben werden. Dabei wird vorzugsweise jeder Endabschnitt von jeweils einem Aktorelement bewegt, so dass sich die Endabschnitte etwa in der Mitte ihres ursprünglichen Abstandes in radialer Richtung treffen und zusammengeführt werden.

Die Variabilität der Vorrichtung lässt sich gemäß einer weiteren Ausgestaltung dadurch steigern, dass das erste Aktorelement und das zweite Aktorelement, insbesondere an einem Steuerkopf, um eine Drehachse verstellbar gehalten sind. Die Drehachse ist vorzugsweise parallel zur Mittelachse der Kreisbahn ausgerichtet, so dass die Aktorelemente beispielsweise auf Endabschnitte bzw. Endabschnittpaare ausrichtbar sind, die auf unterschiedlichen Radien angeordnet sind. Insbesondere lässt sich die Vorrichtung dann für Wicklungsträger mit unterschiedlichen Radien verwenden.

Insbesondere die Standzeit der Vorrichtung lässt sich dadurch verlängern, dass das erste Aktorelement und/oder das zweite Aktorelement eine Kühlvorrichtung aufweist. Die Kühlvorrichtung dient zur Kühlung zumindest eines Teils, insbesondere der vollständigen Aktorelemente und umfasst beispielsweise Ausnehmungen innerhalb der Aktorelemente, die von einem Kühlmedium, insbesondere einer Flüssigkeit oder einem Gas, beispielsweise Druckluft, durchströmt werden können. Durch die Kühlung wird der Verschleiß der Aktorelemente reduziert und deren Standzeit erhöht.

Eine Weiterbildung der Vorrichtung sieht vor, dass ein mit einem Endabschnitt kontaktierbarer Bereich eines Aktorelements, insbesondere beide Aktorelemente, einen trapezförmigen Aufnahmebereich - eine Richtgeometrie - aufweist, insbesondere mit einer orthogonal zu einer Längsachse des Aktorelements ausgerichteten Anlagefläche und zwei dazu geneigten Führungsflächen. Der Aufnahmebereich dient dazu die Endabschnitte richtig zu positionieren, damit sie in der Schweißposition vorteilhaft ausgerichtet sind. Dazu ist eine Anlagefläche vorgesehen, die vorzugsweise derart ausgerichtet ist, dass eine Radialrichtung ausgehend von der Mittelachse der Kreisbahn eine Ebenen-Normale einer Ebene ist, in der die Anlagefläche angeordnet ist. Die geneigten Führungsflächen sind ausgehend von der Anlagefläche im Querschnitt trapezförmig angeordnet, so dass ein Endabschnitt durch die Führungsflächen in Richtung der Anlagefläche geführt wird. In der Schweißposition liegt die Anlagefläche eben an einer Fläche eines Endabschnitts an.

Zur Steigerung der Effektivität der Vorrichtung ist vorgesehen, dass das erste Aktorelement und das zweite Aktorelement gekröpft ausgebildet sind, so dass Endabschnitte auf unterschiedlichen Radien, insbesondere zwei, vier, sechs oder acht unterschiedlichen Radien, bearbeitbar sind. Dabei ist sowohl vorgesehen, dass die Aktorelemente derart gekröpft ausgebildet sind, dass jeweils zwei, drei oder vier Endabschnittpaare gleichzeitig oder nacheinander mit den Aktorelementen zusammenführbar sind.

Ferner hat sich gemäß einer weiteren Ausgestaltung der Vorrichtung als vorteilhaft herausgestellt, wenn vorgesehen ist, dass die Aktorelemente zumindest teilweise beschichtet sind, insbesondere mit einer Beschichtung aus Keramik beschichtet sind. Um eine Beeinflussung der Aktorelemente durch den Schweißvorgang zu verhindern ist vorgesehen, dass die Aktorelemente zu mindestens in den Bereichen, in denen diese unmittelbar mit den Endabschnitten in Kontakt kommen, beschichtet sind. Vorzugsweise sind die Aktorelemente vollständig beschichtet. Neben einer Beschichtung aus Keramik haben sich auch Beschichtungen mittels physikalischer Gasphasenabscheidung mit Titancarbid, Titanchromnitrid oder Zirkoniumcarbonitrid und/oder mittels chemischer Gasphasenabscheidung mit Titancarbid, Titannitrid/Titancarbid oder Titannitrid/Tintancarbid als vorteilhaft herausgestellt.

Im Einzelnen gibt es nun eine Vielzahl von Möglichkeiten das Verfahren und die Vorrichtung auszugestalten und weiterzubilden. Dazu wird verwiesen sowohl auf die den Patentansprüchen 1 und 6 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel einer Vorrichtung in perspektivischer Ansicht,
- Fig. 2: das Ausführungsbeispiel der Vorrichtung gemäß Fig. 1 in einem weiteren Zustand,
- Fig. 3: eine Vergrößerung eines Ausschnitts gemäß Fig. 2,
- Fig. 4: eine Draufsicht auf eine Vorrichtung gemäß Fig. 1,
- Fig. 5: ein Ausführungsbeispiel einer erfindungsgemäßen Vorrichtung in perspektivischer Ansicht,
- Fig. 6: eine Draufsicht auf das Ausführungsbeispiel gemäß Fig. 5,
- Fig. 7: ein Ausführungsbeispiel einer erfindungsgemäßen Vorrichtung in perspektivischer Ansicht,
- Fig. 8: eine Draufsicht auf das Ausführungsbeispiel gemäß Fig. 7,
- Fig. 9: ein schematischer Ablauf eines Verfahrens.

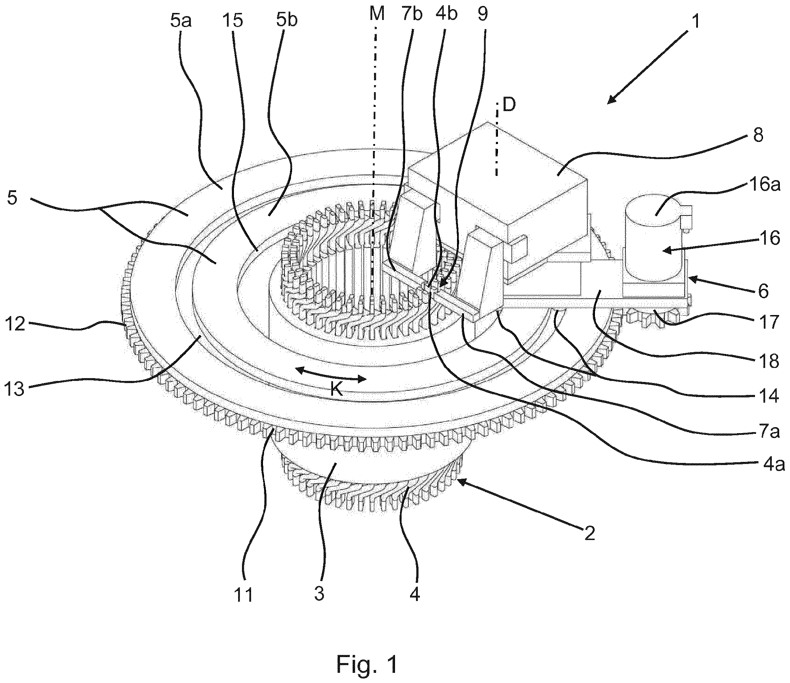

Fig. 1 zeigt ein Ausführungsbeispiel einer Vorrichtung 1 zur Durchführung eines Verfahrens 100 zum Bearbeiten von Leitersegmenten 2 eines Wicklungsträgers 3 einer elektrischen Maschine, hier eines Stators eines Elektromotors. Die Leitersegmente 2 ragen an beiden Endseiten des Wicklungsträgers 3 mit Endabschnitten 4 aus diesem heraus. Bei dem dargestellten Ausführungsbeispiel sind die Endabschnitte 4 bereits vertwistet, also aus ihrer Ausgangslage um die Mittelachse M herum verdreht.

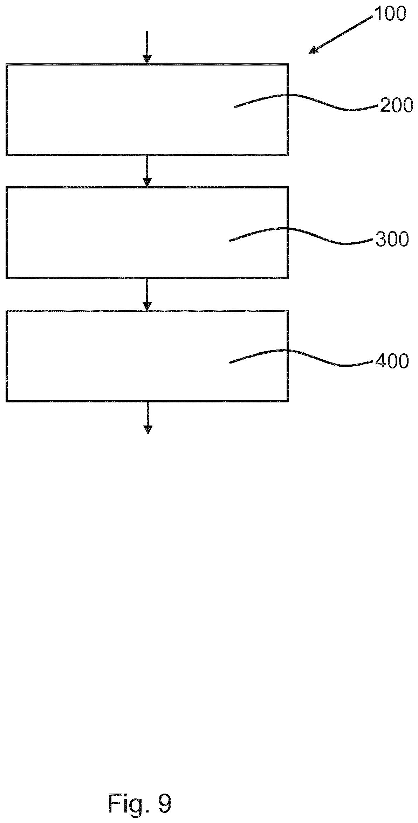

Gemäß Fig. 1 ist der Verfahrensschritt des Heranführens 200 - siehe Fig. 9 - einer Führungsvorrichtung 5 mit einer an der Führungsvorrichtung 5 auf einer Kreisbahn bewegbaren Bearbeitungseinheit 6 bzw. eines ersten Endabschnitts 4a und eines zweiten Endabschnitts 4b an die Bearbeitungseinheit 6 bereits erfolgt. Bei diesem Ausführungsbeispiel ist die Führungsvorrichtung 5 als kreisförmiges Schienenelement ausgebildet.

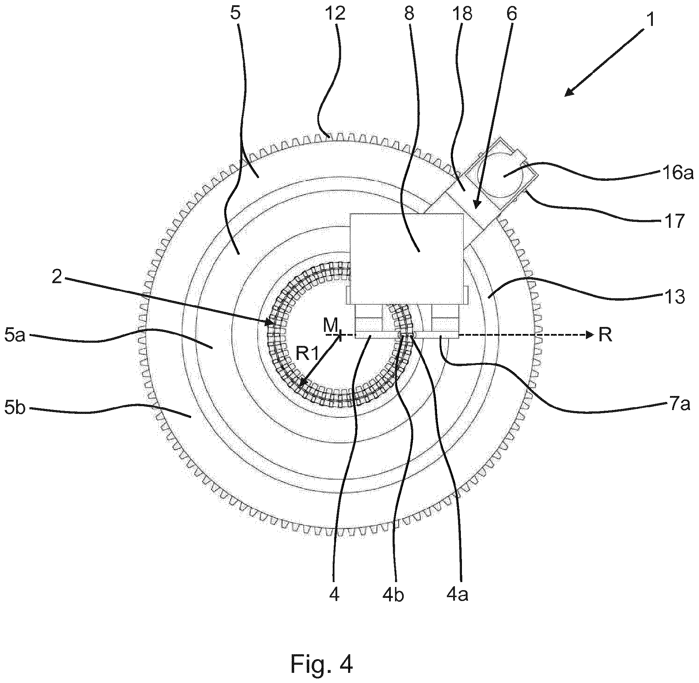

Die Bearbeitungseinheit 6 umfasst ein erstes Aktorelement 7a und ein zweites Aktorelement 7b, die bei diesem Ausführungsbeispiel in einem Steuerkopf 8 pneumatisch bewegbar gehalten sind. Das erste Aktorelement 7a und das zweite Aktorelement 7b sind auf einer gedachten, gemeinsamen Achse, die in Radialrichtung R - siehe Fig. 4 - zu einer Mittelachse M der Kreisbahn K ausgerichtet ist, geführt. Das erste Aktorelement 7a und das zweite Aktorelement 7b sind so gehalten, dass sie stets in einer Radialrichtung R, ausgehend von der Mittelachse M ausgerichtet sind.

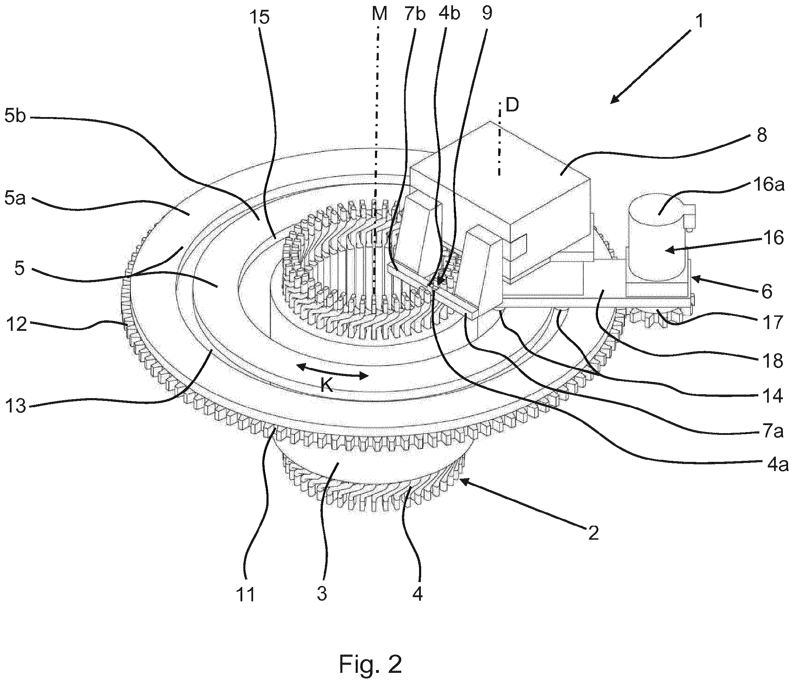

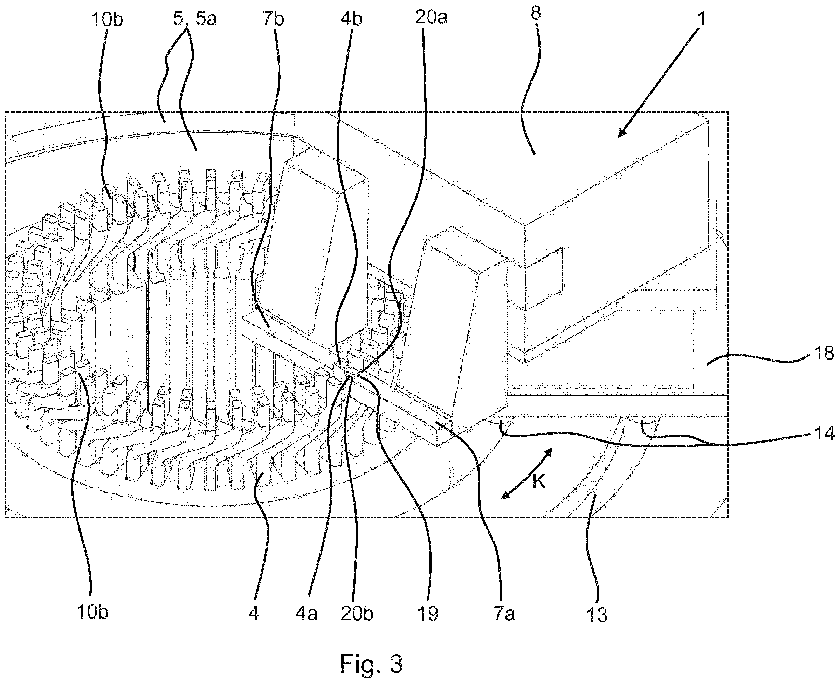

Ausgehend von dem in Fig. 1 dargestellten Zustand der Vorrichtung 1 erfolgt gemäß Fig. 9 das Zusammenführen 300 des ersten Aktorelements 7a und des zweiten Aktorelements 7b in der Radialrichtung R - siehe Fig. 4 -, so dass in einem Klemmbereich 9 eine Klemmkraft, resultierend aus zwei von dem ersten Aktorelement 7a und dem zweiten Aktorelement 7b verursachten, entgegengesetzten Kräften, auf den ersten Endabschnitt 4a und den zweiten Endabschnitt 4b derart bewirkt wird, dass der erste Endabschnitt 4a und der zweite Endabschnitt 4b in eine in Fig. 2 und Fig. 3 dargestellte Schweißposition zusammengeführt sind. Ausgehend von der in Fig. 2 und Fig. 3 dargestellten Schweißposition kann der erste Endabschnitt 4a mit dem zweiten Endabschnitt 4b mittels Laserschweißen verschweißt werden 400 - siehe Fig. 9.

Fig. 2 und Fig. 3 zeigen die Vorrichtung gemäß Fig. 1 in der Schweißposition, in der unmittelbar ein Verschweißen 400 des ersten Endabschnitts 4a mit dem zweiten Endabschnitt 4b erfolgen kann. Der erste Endabschnitt 4a und der zweite Endabschnitt 4b sind parallel zu einer Radialrichtung R - siehe Fig. 4 - ausgehend von der Mittelachse M der Kreisbahn und auch des Wicklungsträgers 3 zusammengeführt, so dass die in Fig. 3 ersichtlichen Seitenflächen 10a und 10b des ersten Endabschnitts 4a und des zweiten Endabschnitts 4b flächig aneinander anliegen. Jedes der als Aktorstäbe ausgebildeten Aktorelemente 7a, 7b bewirkt eine Klemmkraft in entgegengesetzter Richtung in entlang der Radialrichtung R.

Nachdem das in der Schweißposition gehaltene Endabschnittpaar 4a, 4b verschweißt ist, löst die Bearbeitungseinheit 6 das erste Aktorelement 7a und das zweite Aktorelement 7b, indem diese wieder in entgegengesetzte Richtungen auseinander gefahren werden - beispielhaft dargestellt in Fig. 4. Aus diesem Zustand kann die Bearbeitungseinheit 6 dann zu einem nächsten Endabschnittpaar 4a, 4b verfahren, um dieses Endabschnittpaar 4a, 4b analog zusammenzuführen 300.

Gemäß den Fig. 1, Fig. 2, Fig. 3 und Fig. 4 ist die Führungsvorrichtung 5 als kreisförmiges Schienenelement mit einem äußeren Schienenring 5a und einem inneren Schienenring 5b ausgebildet, wobei der außenliegende Schienenring 5a ferner einen Zahnring 11 mit Zähnen 12 aufweist. Zwischen dem innenliegenden Schienenring 5b und dem außenliegenden Schienenring 5a ist eine Führungsnut 13 ausgebildet. Die Bearbeitungseinheit 6 ist mit Führungsrollen 14 in der Führungsnut 13 und an dem innenliegenden Umfang 15 des inneren Schienenrings 5b geführt.

Die Bearbeitungseinheit 6 ist mit einem Antrieb 16 auf der Führungsvorrichtung 5 bewegbar, wobei der Antrieb 16 bei diesem Ausführungsbeispiel als Elektromotor 16a mit einem Zahnrad 17 ausgebildet ist. Das Zahnrad 17 wirkt mit den Zähnen 12 des Zahnrings 11 zusammen, so dass die Bearbeitungseinheit 6 entlang der Kreisbahn K bewegbar ist. Die Bearbeitungseinheit 6 weist eine Grundplatte 18 auf, an der der Antrieb 16 und der Steuerkopf 8 mit den Aktorelementen 7a, 7b gehalten ist. Der Steuerkopf 8 ist um eine Drehachse D, die im Wesentlichen parallel zur Mittelachse M ist, rotativ verstellbar gehalten, so dass die Aktorelemente 7a, 7b auf unterschiedliche Radien R1 - siehe Fig. 4 - ausrichtbar sind.

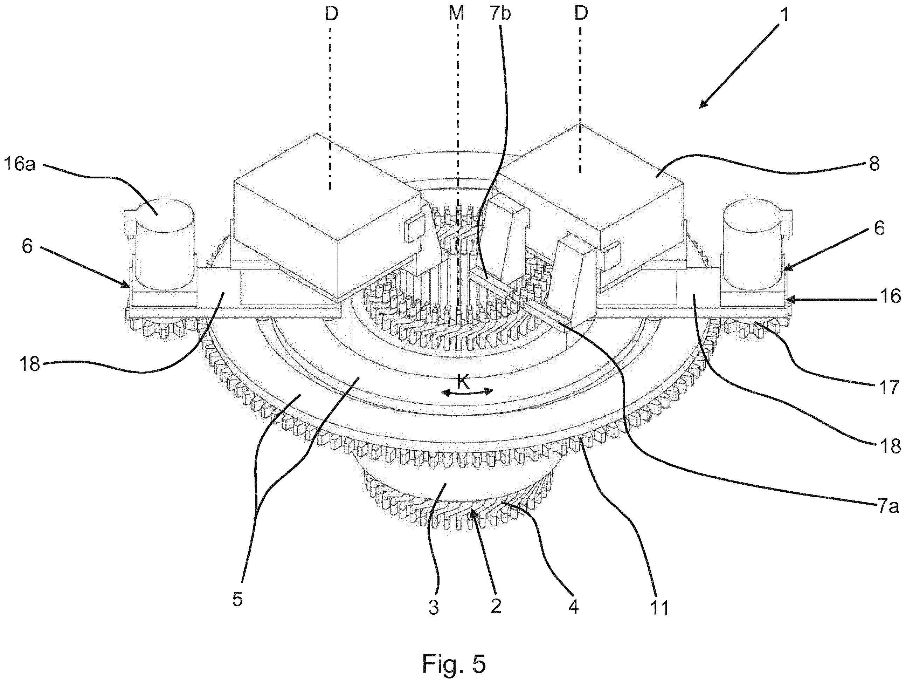

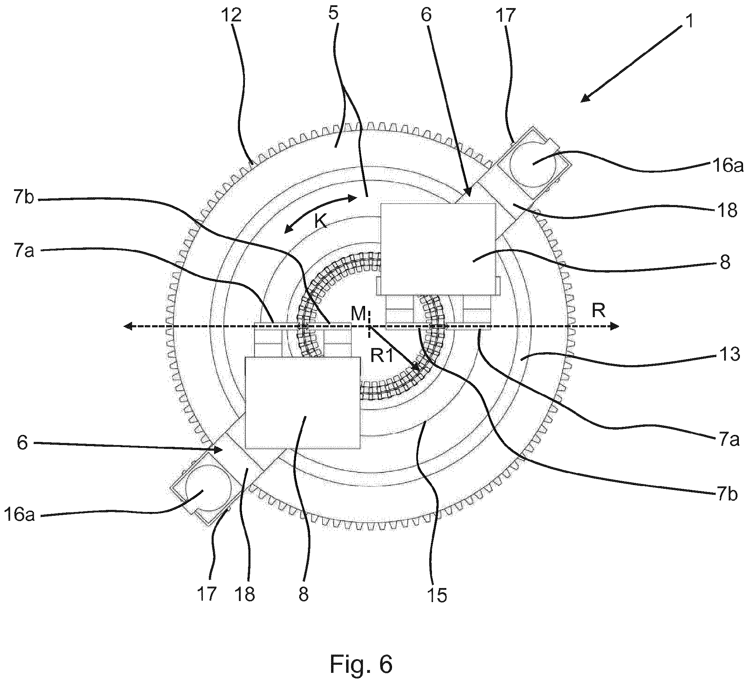

Fig. 5 und Fig. 6 zeigen ein erfindungsgemäßes Ausführungsbeispiel einer Vorrichtung 1 mit zwei Bearbeitungseinheiten 6. Fig. 5 zeigt das Ausführungsbeispiel in perspektivischer Ansicht, Fig. 6 in Draufsicht. Die Bearbeitungseinheiten 6 sind an der gemeinsamen Führungsvorrichtung 5 auf der Kreisbahn K bewegbar gehalten, so dass mit den Bearbeitungseinheiten 6 nach und nach alle Endabschnittpaare 4a, 4b anfahrbar und zusammenführbar sind. Die Aktorelemente 7a, 7b sind bei diesem Ausführungsbeispiel auf gleichem Radius R1 gehalten, so dass die Bearbeitungszeit durch das Vorhandensein von zwei Bearbeitungseinheiten 6 verkürzt und die Auslastung einer - nicht dargestellten - Schweißvorrichtung gesteigert wird. Die Bearbeitungseinheiten 6 sind identisch mit der Bearbeitungseinheit 6 gemäß Fig. 1 bis Fig. 4 ausgebildet.

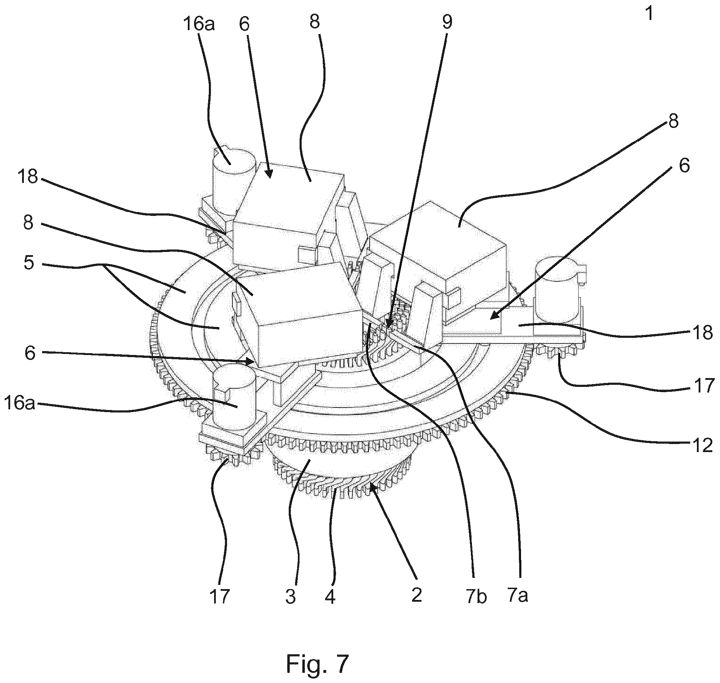

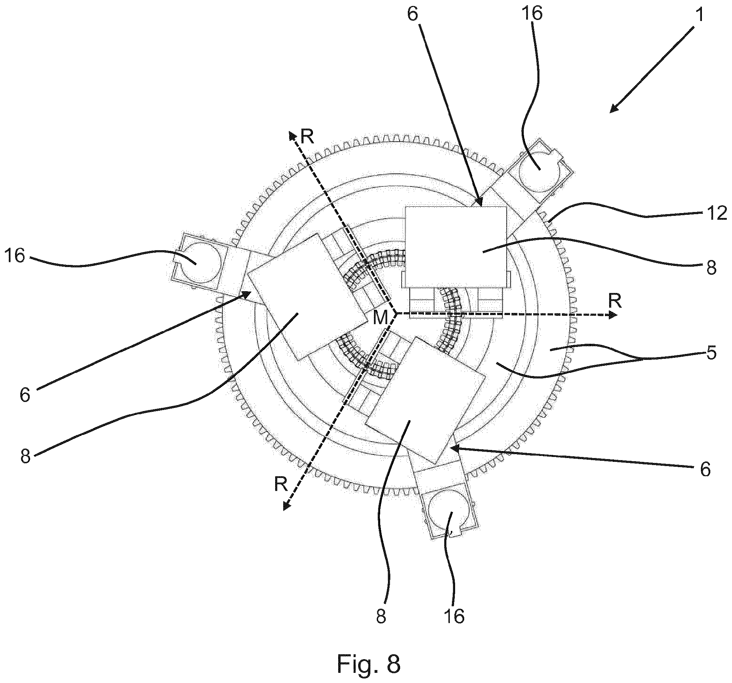

Fig. 7 und 8 zeigen ein weiteres, erfindungsgemäßes Ausführungsbeispiel einer Vorrichtung 1 mit drei auf einer gemeinsamen Führungsvorrichtung 5 geführten Bearbeitungseinheiten 6. Die Bearbeitungseinheiten 6 sind so gesteuert, dass stets zwei Bearbeitungseinheiten 6 - gemäß Fig. 8 unten und links dargestellt - das jeweilige Endabschnittpaar 4a, 4b in Schweißposition halten, während die dritte Bearbeitungseinheit 6, gemäß Fig. 8 rechts oben dargestellt, zu einem zu verschweißenden Endabschnittpaar 4a, 4b verfahren wird. Alle Bearbeitungseinheiten 6 sind identisch zu der Bearbeitungseinheit 6 gemäß den Fig. 1 bis Fig. 4 ausgebildet und weisen jeweils einen Antrieb 16, eine Grundplatte 18 sowie einen Steuerkopf 8 mit daran geführten Aktorelementen 7a, 7b auf. Die tatsächliche Bewegung erfolgt durch ein Zusammenwirken des Zahnrings 11 mit Zähnen 12 und dem Zahnrad 17.

Um die Endabschnitte 4a, 4b auszurichten und zu führen, weisen die Aktorelemente 7a, 7b eine, insbesondere aus Fig. 3 ersichtliche, Richtgeometrie auf, die eine Anlagefläche 19 und zwei dazu geneigte Führungsflächen 20a, 20b aufweist. Die Führungsflächen 20a, 20b führen einen Endabschnitt 4a, 4b in Richtung der Anlagefläche 19.

Fig. 9 zeigt schematisch den Ablauf eines Ausführungsbeispiels eines Verfahrens 100 zum Bearbeiten von Leitersegmenten 2 eines Wicklungsträgers 3 einer elektrischen Maschine. Gemäß dem Verfahren 100 erfolgt zunächst ein Heranführen 200 einer auf einer Kreisbahn K entlang einer Führungsvorrichtung 5 bewegbaren Bearbeitungseinheit 6 mit mindestens einem ersten Aktorelement 7a und mindestens einem zweiten Aktorelement 7b an mindestens ein erstes Endabschnittpaar 4a, 4b mit einem ersten Endabschnitt 4a und einem zweiten Endabschnitt 4b oder des ersten Endabschnitts 4a und des zweiten Endabschnitts 4b an die Bearbeitungseinheit 6 - siehe auch Fig. 1.

Nachfolgend erfolgt ein Zusammenführen 300 des ersten Aktorelements 7a und des zweiten Aktorelements 7b, so dass mit entgegengesetzt wirkenden Kräften in einem Klemmbereich 9 mindestens eine Klemmkraft den ersten Endabschnitt 4a und den zweiten Endabschnitt 4b in eine Schweißposition zusammenführt - siehe auch Fig. 2. Das Zusammenführen 300 erfolgt vorzugsweise in einer Ebene, zu der die Mittelachse M der Kreisbahn K bzw. des Wicklungsträgers 3 eine Ebenen-Normale ist.

Abschließend erfolgt das Verschweißen 400 des ersten Endabschnitts 4a und des zweiten Endabschnitts 4b mittels Laserschweißen. Nachfolgend ist vorgesehen, dass sich das erste Aktorelement 7a und das zweite Aktorelement 7b wieder von den Endabschnitten 4a, 4b lösen und an das nächste Endabschnittpaar 4a, 4b herangeführt 200 werden.

Diese Verfahrensschritte werden mit wechselnden Endabschnittpaaren 4a, 4b solange durchgeführt, bis alle Endabschnittpaare 4a, 4b verschweißt sind. Danach ist die Bearbeitung abgeschlossen.

## Patentansprüche

1. Verfahren (100) zum Bearbeiten von Leitersegmenten (2) eines Wicklungsträgers (3) einer elektrischen Maschine, insbesondere eines Elektromotors, wobei mindestens zwei Leitersegmente (2) an dem Wicklungsträger (3) angeordnet sind, wobei die Leitersegmente (2) mit Endabschnitten (4) endseitig aus dem Wicklungsträger (3) hervorragen, wobei mindestens zwei Bearbeitungseinheiten (6) gemeinsam an einer Führungsvorrichtung (5) geführt sind, wobei jede der Bearbeitungseinheiten (6) mindestens die folgenden Verfahrensschritte ausführt:
- Heranführen (200) der auf einer Kreisbahn (K) entlang einer Führungsvorrichtung (5) bewegbaren Bearbeitungseinheit (6) mit mindestens einem ersten Aktorelement (7a) und mindestens einem zweiten Aktorelement (7b) an mindestens ein erstes Endabschnittpaar (4a, 4b) mit einem ersten Endabschnitt (4a) und einem zweiten Endabschnitt (4b) oder des ersten Endabschnitts (4a) und des zweiten Endabschnitts (4b) an die Bearbeitungseinheit (6),
- Zusammenführen (300) des ersten Aktorelements (7a) und des zweiten Aktorelements (7b), so dass in einem Klemmbereich (9) eine Klemmkraft den ersten Endabschnitt (4a) und den zweiten Endabschnitt (4b) in eine Schweißposition zusammenführt,
- Verschweißen (400) des ersten Endabschnitts (4a) und des zweiten Endabschnitts (4b),
wobei die Bearbeitungseinheiten (6) so gesteuert werden, dass mindestens eine erste Bearbeitungseinheit (6) ein Endabschnittspaar (4a, 4b) in der Schweißposition hält, während mindestens eine zweite Bearbeitungseinheit (6) zu einem noch zu verschweißenden Endabschnittspaar (4a, 4b) bewegt wird.

2. Verfahren (100) nach Anspruch 1,
**dadurch gekennzeichnet, dass**
das erste Aktorelement (7a) und das zweite Aktorelement (7b) eine Klemmkraft auf das Endabschnittpaar (4a, 4b) bewirken, bis das Verschweißen (400) abgeschlossen ist und/oder
dass das Zusammenführen (300) des ersten Aktorelements (7a) und des zweiten Aktorelements (7b) parallel zu einer Radialrichtung (R) einer Mittelachse (M) der Kreisbahn (K) erfolgt.

3. Verfahren (100) nach Anspruch 1 oder 2,
**dadurch gekennzeichnet, dass**
eine Mehrzahl von Leitersegmenten (2), insbesondere eine Mehrzahl von Endabschnittpaaren (4a, 4b) vorhanden sind, und dass alle Endabschnittpaare (4a, 4b) nacheinander zusammengeführt und verschweißt werden.

4. Verfahren (100) nach einem der Ansprüche 1 bis 3,
**dadurch gekennzeichnet, dass**
mittels einer Richtgeometrie des ersten Aktorelements (7a) und/oder des zweiten Aktorelements (7b) während des Zusammenführens (300) und/oder in der Schweißposition eine Ausrichtung des ersten Endabschnittes (4a) und/oder des zweiten Endabschnittes (4b) erfolgt und/oder dass
mindestens ein in einer Radialrichtung (R) ausgehend von einer Mittelachse (M) der Kreisbahn (K) innenliegendes Endabschnittpaar (4a, 4b) und mindestens ein radial außenliegendes Endabschnittspaar (4a, 4b) nacheinander oder gleichzeitig zusammengeführt (300) und verschweißt (400) werden.

5. Verfahren (100) nach einem der Ansprüche 1 bis 4,
**dadurch gekennzeichnet, dass**
mindestens ein in einer Radialrichtung (R) ausgehend von einer Mittelachse (M) der Kreisbahn (K) innenliegendes Endabschnittpaar (4a, 4b) mit einem ersten Aktorelement (7a) und einem zweiten Aktorelement (7b) zusammengeführt werden und mindestens ein radial außenliegendes Endabschnittspaar (4a, 4b) mit einem dritten Aktorelement und einem vierten Aktorelement zusammengeführt werden und/oder dass
das erste Aktorelement (7a) und/oder das zweite Aktorelement (7b) zumindest während des Verschweißens (400) gekühlt werden, insbesondere dauerhaft gekühlt werden.

6. Vorrichtung (1) zum Bearbeiten von Leitersegmenten (2) eines Wicklungsträgers (3) einer elektrischen Maschine, insbesondere eines Elektromotors, gemäß dem Verfahren nach Anspruch 1, aufweisend mindestens eine Führungsvorrichtung (5) und mindestens zwei Bearbeitungseinheiten (6), die gemeinsam an der Führungsvorrichtung (5) geführt und so steuerbar sind, dass sich die Bearbeitungseinheiten (6) untereinander beeinflussungsfrei bewegen, und die entlang der Führungsvorrichtung (5) auf einer Kreisbahn (K) bewegbar gehalten sind, wobei die Bearbeitungseinheiten (6) jeweils mindestens ein erstes Aktorelement (7a) und mindestens ein zweites Aktorelement (7b) aufweisen,
und wobei das erste Aktorelement (7a) und das zweite Aktorelement (7b) relativ zueinander bewegbar sind, so dass in einem Klemmbereich (9) zwischen dem ersten Aktorelement (7a) und dem zweiten Aktorelement (7b) eine Klemmkraft bewirkbar ist, wobei die Führungsvorrichtung (5) mindestens ein kreisförmiges Schienenelement aufweist und die Bearbeitungseinheiten (6) jeweils eine Grundplatte (18) aufweisen, an der mindestens ein Antrieb (16), das erste Aktorelement (7a) und das zweite Aktorelement (7b) angeordnet sind.

7. Vorrichtung (1) nach Anspruch 6,
**dadurch gekennzeichnet, dass**
drei, vier, fünf oder sechs Bearbeitungseinheiten (6) an der Führungsvorrichtung (5) geführt sind.

8. Vorrichtung (1) nach Anspruch 6 oder 7,
**dadurch gekennzeichnet, dass**
der Antrieb (16) elektromotorisch und/oder linearmotorisch und/oder pneumatisch und/oder hydraulisch ausgebildet ist.

9. Vorrichtung (1) nach einem der Ansprüche 6 bis 8,
**dadurch gekennzeichnet, dass**
das erste Aktorelement (7a) und/oder das zweite Aktorelement (7b) elektromotorisch und/oder linearmotorisch und/oder pneumatisch und/oder hydraulisch bewegbar sind.

10. Vorrichtung (1) nach einem der Ansprüche 6 bis 9,
**dadurch gekennzeichnet, dass**
die Bearbeitungseinheiten (6) mindestens eine Spritzschutzvorrichtung, insbesondere mindestens ein Spritzschutzblech, aufweisen.

11. Vorrichtung (1) nach einem der Ansprüche 6 bis 10,
**dadurch gekennzeichnet, dass**
das erste Aktorelement (7a) und/oder das zweite Aktorelement (7b) als Aktorstab ausgebildet ist und/oder dass
das erste Aktorelement (7a) und das zweite Aktorelement (7b) um eine Drehachse (D) verstellbar gehalten sind.

12. Vorrichtung (1) nach einem der Ansprüche 6 bis 11,
**dadurch gekennzeichnet, dass**
das erste Aktorelement (7a) und/oder das zweite Aktorelement (7b) mindestens eine Kühlvorrichtung aufweist.

13. Vorrichtung (1) nach einem der Ansprüche 6 bis 12,
**dadurch gekennzeichnet, dass**
ein mit einem Endabschnitt (4) kontaktierbarer Bereich eines Aktorelements (7a, 7b) einen trapezförmigen Aufnahmebereich aufweist, insbesondere mit einer orthogonal zu einer Längsachse des Aktorelements (7a, 7b) ausgerichteten Anlagefläche (19) und zwei geneigten Führungsflächen (20a, 20b).

14. Vorrichtung (1) nach einem der Ansprüche 6 bis 13,
**dadurch gekennzeichnet, dass**
das erste Aktorelement (7a) und das zweite Aktorelement (7b) gekröpft ausgebildet sind, so dass Endabschnitte (4) auf unterschiedlichen Radien bearbeitbar sind.

15. Vorrichtung (1) nach einem der Ansprüche 6 bis 14,
**dadurch gekennzeichnet, dass**
das erste Aktorelement (7a) und/oder das zweite Aktorelement (7b) zumindest teilweise beschichtet sind, insbesondere mit einer Beschichtung aus einer Keramik.

## Claims

1. A method (100) for processing conductor segments (2) of a winding support (3) of an electric machine, in particular of an electric motor, wherein at least two conductor segments (2) are arranged on the winding support (3), wherein end portions (4) of the conductor segments (2) protrude out of the ends of the winding support (3), wherein at least two processing units (6) are being jointly led along a guide device (5), wherein each one of the processing units (6) performs at least one of the following steps:
- advancing (200) a processing unit (6), which can be moved on a circular path (K) along a guide device (5) and comprises at least one first actuator element (7a) and at least one second actuator element (7b), to at least one first end portion pair (4a, 4b) having a first end portion (4a) and a second end portion (4b), or advancing (200) the first end portion (4a) and the second end portion (4b) to the processing unit (6),
- bringing together (300) the first actuator element (7a) and the second actuator element (7b) so that, in a clamping region (9), a clamping force brings together the first end portion (4a) and the second end portion (4b) into a welding position,
- welding (400) the first end portion (4a) and the second end portion (4b),
wherein the processing units (6) are controlled such that at least one first processing unit (6) holds an end portion pair (4a, 4b)-in the welding position while at least one second processing unit (6) is moved to an end portion pair (4a, 4b) yet to be welded.

2. The method (100) as claimed in claim 1,
**characterized in that,**
the first actuator element (7a) and the second actuator element (7b) apply a clamping force to the end portion pair (4a, 4b) until the welding (400) is complete and/or
the bringing together (300) of the first actuator element (7a) and the second actuator element (7b) takes place parallel to a radial direction (R) of a central axis (M) of the circular path (K).

3. The method (100) as claimed in claim 1 or 2,
**characterized in that,**
a plurality of conductor segments (2), in particular a plurality of end portion pairs (4a, 4b) is present, and all of the end portion pairs (4a, 4b) are brought together and welded in succession.

4. The method (100) as claimed in claim 1 to 3,
**characterized in that,**
by means of an alignment geometry of the first actuator element (7a) and/or or the second actuator element (7b), an alignment of the first end portion (4a) and/or or of the second end portion (4b) takes place during the bringing together (300) and/or or in the welding position and/or that
at least one of the end portion pair (4a, 4b) pairs lying on the inside in a radial direction (R), starting from a central axis (M) of the circular path (K), and at least one of the end portion pair (4a, 4b) pairs lying radially on the outside, are brought together (300) and welded (400) successively or simultaneously.

5. The method (100) as claimed in claim 1 to 4,
**characterized in that,**
at least one end of the portion pairs (4a, 4b) lying on the inside in a radial direction (R), starting from a central axis (M) of the circular path (K), is brought together by a first actuator element (7a) and a second actuator element (7b), and at least one of the end portion pairs (4a, 4b) lying radially on the outside is brought together by a third actuator element and a fourth actuator element and/or that the first actuator element (7a) and/or or the second actuator element (7b) are actively cooled, in particular permanently cooled, at least during the welding (400).

6. A device (1) for processing conductor segments (2) of a winding support (3) of an electric machine, in particular an electric motor, according to the method as claimed in claim 1, comprising at least one guide device (5) and at least two processing units (6) that are jointly guided on the guide device (5) and can be controlled such that the processing units (6) move interference free among each other, and that are being held so as to be movable along the guide device (5) on a circular path (K),
wherein the processing units (6) comprise at least one first actuator element (7a) and at least one second actuator element (7b), and
wherein the first actuator element (7a) and the second actuator element (7b) are movable relative to each other such that a clamping force can be applied in a clamping region (9) between the first actuator element (7a) and the second actuator element (7b),
wherein the guide device (5) has at least one circular rail element and the processing units (6) each have a base plate (18), on which at least one drive (16), the first actuator element (7a) and the second actuator element (7b) are arranged.

7. The device (1) as claimed in claim 6,
**characterized in that,**
three, four, five or six processing units (6) are guided on the guide device (5).

8. The device (1) as claimed in claim 6 or 7,
**characterized in that,**
the drive (16) is configured as an electric motor and/or linear motor, and/or pneumatic and/or hydraulic.

9. The device (1) as claimed in claim 6 to 8,
**characterized in that,**
the first actuator element (7a) and/or the second actuator element (7b) can be moved by an electric motor and/or a linear motor, and/or pneumatically and/or hydraulically.

10. The device (1) as claimed in claim 6 to 9,
**characterized in that,**
the processing unit (6) has at least one spatter protection device, in particular at least one spatter protection plate.

11. The device (1) as claimed in claim 6 to 10,
**characterized in that,**
the first actuator element (7a) and/or the second actuator element (7b) is formed as an actuator rod and/or that,
the first actuator element (7a) and the second actuator element (7b) are held to be adjustable about a rotation axis (D).

12. The device (1) as claimed in claim 6 to 11,
**characterized in that,**
the first actuator element (7a) and/or the second actuator element (7b) comprises at least one cooling device.

13. The device (1) as claimed in claim 6 to 12,
**characterized in that,**
a region of an actuator element (7a, 7b) which can be contacted by an end portion (4) has a trapezoid receiving region, in particular with a contact face (19) oriented orthogonally to a longitudinal axis of the actuator element (7a, 7b), and with two sloping guide faces (20a, 20b).

14. The device (1) as claimed in claim 6 to 13,
**characterized in that,**
the first actuator element (7a) and the second actuator element (7b) are cranked so that end portions (4) can be processed on different radii.

15. The device (1) as claimed claim 6 to 14,
**characterized in that,**
the first actuator element (7a) and/or the second actuator element (7b) is at least partially coated, in particular with a coating of a ceramic.

## Revendications

1. Procédé (100) d'usinage de segments conducteurs (2) d'un support d'enroulement (3) d'une machine électrique, en particulier d'un moteur électrique, dans lequel au moins deux segments conducteurs (2) sont disposés sur le support d'enroulement (3), dans lequel les segments conducteurs (2) dépassent avec des sections d'extrémité (4) côté extrémité du support d'enroulement (3), dans lequel au moins deux unités d'usinage (6) sont guidées conjointement sur un dispositif de guidage (5), dans lequel chacune des unités d'usinage (6) exécute au moins les étapes de procédé suivantes :
- le rapprochement (200) de l'unité d'usinage (6) pouvant être déplacée le long d'un dispositif de guidage (5) sur une trajectoire circulaire (K) avec au moins un premier élément actionneur (7a) et au moins un deuxième élément actionneur (7b) d'au moins une première paire de sections d'extrémité (4a, 4b) avec une première section d'extrémité (4a) et une seconde section d'extrémité (4b) ou le rapprochement de la première section d'extrémité (4a) et de la seconde section d'extrémité (4b) de l'unité d'usinage (6),
- le regroupement (300) du premier élément actionneur (7a) et du deuxième élément actionneur (7b) de telle sorte qu'une force de serrage regroupe dans une zone de serrage (9) la première section d'extrémité (4a) et la seconde section d'extrémité (4b) dans une position de soudage,
- le soudage (400) de la première section d'extrémité (4a) et de la seconde section d'extrémité (4b),
dans lequel les unités d'usinage (6) sont commandées de telle sorte qu'au moins une première unité d'usinage (6) maintient une paire de sections d'extrémité (4a, 4b) dans la position de soudage, tandis qu'au moins une deuxième unité d'usinage (6) est déplacée vers une paire de sections d'extrémité (4a, 4b) restant à souder.

2. Procédé (100) selon la revendication 1,
**caractérisé en ce que**
le premier élément actionneur (7a) et le deuxième élément actionneur (7b) provoquent une force de serrage sur la paire de sections d'extrémité (4a, 4b) jusqu'à ce que le soudage (400) soit terminé, et/ou **en ce que**
le regroupement (300) du premier élément actionneur (7a) et du deuxième élément actionneur (7b) est effectué de manière parallèle par rapport à un sens radial (R) d'un axe central (M) de la trajectoire circulaire (K).

3. Procédé (100) selon la revendication 1 ou 2,
**caractérisé en ce que**
une multitude de segments conducteurs (2), en particulier une multitude de paires de sections d'extrémité (4a, 4b), sont présents/présentes, et que toutes les paires de sections d'extrémité (4a, 4b) sont regroupées et soudées les unes après les autres.

4. Procédé (100) selon l'une quelconque des revendications 1 à 3,
**caractérisé en ce que**
une orientation de la première section d'extrémité (4a) et/ou de la seconde section d'extrémité (4b) est effectuée au moyen d'une géométrie de dressage du premier élément actionneur (7a) et/ou du deuxième élément actionneur (7b) au cours du regroupement (300) et/ou dans la position de soudage, et/ou **en ce que**
au moins une paire de sections d'extrémité (4a, 4b) située à l'intérieur dans un sens radial (R) en partant d'un axe central (M) de la trajectoire circulaire (K) et au moins une paire de sections d'extrémité (4a, 4b) située à l'extérieur radialement sont regroupées (300) et soudées (400) les unes après les autres ou simultanément.

5. Procédé (100) selon l'une quelconque des revendications 1 à 4,
**caractérisé en ce que**
au moins une paire de sections d'extrémité (4a, 4b) située à l'intérieur dans un sens radial (R) en partant d'un axe central (M) de la trajectoire circulaire (K) est regroupée à un premier élément actionneur (7a) et à un deuxième élément actionneur (7b) et au moins une paire de sections d'extrémité (4a, 4b) située à l'extérieur radialement est regroupée à un troisième élément actionneur et à un quatrième élément actionneur, et/ou **en ce que**
le premier élément actionneur (7a) et/ou le deuxième élément actionneur (7b) sont refroidis au moins au cours du soudage (400), en particulier sont refroidis durablement.

6. Dispositif (1) d'usinage de segments conducteurs (2) d'un support d'enroulement (3) d'une machine électrique, en particulier d'un moteur électrique, selon le procédé selon la revendication 1, présentant au moins un dispositif de guidage (5) et au moins deux unités d'usinage (6), qui sont guidées conjointement sur un des dispositifs de guidage (5) et peuvent être commandées de telle sorte que les unités d'usinage (6) se déplacent sans s'influencer les unes les autres et qui sont maintenues de manière à pouvoir être déplacées sur une trajectoire circulaire (K) le long du dispositif de guidage (5),
dans lequel les unités d'usinage (6) présentent respectivement au moins un premier élément actionneur (7a) et au moins un deuxième élément actionneur (7b),
et dans lequel le premier élément actionneur (7a) et le deuxième élément actionneur (7b) peuvent être déplacés l'un par rapport à l'autre de telle sorte qu'une force de serrage peut être provoquée dans une zone de serrage (9) entre le premier élément actionner (7a) et le deuxième élément actionneur (7b), dans lequel le dispositif de guidage (5) présente au moins un élément de rail de forme circulaire et les unités d'usinage (6) présentent respectivement une plaque de base (18), sur laquelle sont disposés au moins un entraînement (16), le premier élément actionneur (7a) et le deuxième élément actionneur (7b).

7. Dispositif (1) selon la revendication 6,
**caractérisé en ce que**
trois, quatre, cinq ou six unités d'usinage (6) sont guidées sur le dispositif de guidage (5).

8. Dispositif (1) selon la revendication 6 ou 7,
**caractérisé en ce que**
l'entraînement (16) est réalisé de manière électromotorisée et/ou de manière motorisée et linéaire et/ou de manière pneumatique et/ou de manière hydraulique.

9. Dispositif (1) selon l'une quelconque des revendications 6 à 8,
**caractérisé en ce que**
le premier élément actionneur (7a) et/ou le deuxième élément actionneur (7b) peuvent être déplacés de manière électromotorisée et/ou de manière motorisée et linéaire et/ou de manière pneumatique et/ou de manière hydraulique.

10. Dispositif (1) selon l'une quelconque des revendications 6 à 9,
**caractérisé en ce que**
les unités d'usinage (6) présentent au moins un dispositif de protection anti-projections, en particulier au moins une tôle de protection anti-projections.

11. Dispositif (1) selon l'une quelconque des revendications 6 à 10,
**caractérisé en ce que**
le premier élément actionneur (7a) et/ou le deuxième élément actionneur (7b) sont réalisés en tant que barre d'actionneur, et/ou **en ce que**
le premier élément actionneur (7a) et le deuxième élément actionneur (7b) sont maintenus de manière ajustable autour d'un axe de rotation (D).

12. Dispositif (1) selon l'une quelconque des revendications 6 à 11,
**caractérisé en ce que**
le premier élément actionneur (7a) et/ou le deuxième élément actionneur (7b) présentent au moins un dispositif de refroidissement.

13. Dispositif (1) selon l'une quelconque des revendications 6 à 12,
**caractérisé en ce que**
une zone, pouvant être mise en contact avec une section d'extrémité (4), d'un élément d'actionneur (7a, 7b) présente une zone de logement trapézoïdale, en particulier avec une face d'appui (19) orientée de manière orthogonale par rapport à un axe longitudinal de l'élément actionneur (7a, 7b) et deux faces de guidage (20a, 20b) inclinées.

14. Dispositif (1) selon l'une quelconque des revendications 6 à 13,
**caractérisé en ce que**
le premier élément actionneur (7a) et le deuxième élément actionneur (7b) sont réalisés de manière coudée de telle sorte que des sections d'extrémité (4) peuvent être usinées sur des rayons différents.

15. Dispositif (1) selon l'une quelconque des revendications 6 à 14,
**caractérisé en ce que**
le premier élément actionneur (7a) et/ou le deuxième élément actionneur (7b) sont au moins en partie revêtus, en particulier d'un revêtement composé d'une céramique.
